# EUROPEAN PATENT APPLICATION

(11) **EP 4 831 042 A1**
(43) Date of publication of application: **28.10.2026**
(21) Application number: 26172009.8
(22) Date of filing: 13.04.2026
(51) Int. Cl.: B62D 25/12, B62D 35/00

(54) **IMPROVED FRONT PORTION OF A HEAVY VEHICLE**

(30) Priority: 16.04.2025 IT 202500008529
(71) Applicant: Iveco S.p.A., 10156 Torino (IT)
(72) Inventor: MORANO, Ivan Vito Antonio, 10156 TORINO (IT); ESPOSITO, Carmine Andrea, 10156 TORINO (IT)
(74) Representative: Studio Torta S.p.A.

(57) **Abstract**

Air blocking element (11) for a cab (3) of a commercial vehicle (1), such air blocking element (11) comprising a main portion (12) provided with an upper edge (12') and a lower edge (12"), wherein the upper edge (12') is substantially linear and at the same quota along a vertical axis (B) of the cab (3), the lower edge (12") has a variable extension with respect to the upper edge (12') along such vertical axis (B),
wherein, in use, the upper edge (12') is at the same height of the upper edge of a hood (4) of the vehicle (1) and wherein, the lower edge (12"), in use, contours an upper portion of a perimeter (6) of a space (5) of the vehicle (1).

## Description

### CROSS-REFERENCE TO RELATED APPLICATIONS

This patent application claims priority from Italian patent application no. 102025000008529 filed on April 16, 2025, the entire disclosure of which is incorporated herein by reference.

### TECHNICAL FIELD

The present invention concerns a front portion of a heavy vehicle.

The present invention finds its preferred, although not exclusive, application in commercial vehicles such as trucks. Reference will be made to this application by way of example below.

### BACKGROUND OF THE INVENTION

Commercial vehicles such as trucks comprises a cab configured to house both operative systems of the vehicle and driver's seat arrangement.

Driver's seat arrangement is placed, in the most common configuration also known as "cab over", above the operative systems also for sake of providing a great view field over the road.

Accordingly, cabs of commercial vehicles have a vertical extension greater with respect to passenger vehicles thereby having increased problems linked to aerodynamic drag.

Indeed, aerodynamic drag increases squarely with respect to the speed of the vehicle. Accordingly, the problem is particularly felt in commercial vehicles that are further at high speed on highways for long distances.

It is therefore clear that reducing vehicle drag would inevitably reduce fuel consumption and therefore increase the efficiency of the vehicle. Such aim is valid both for traditional internal combustion engines and for electrictraction vehicles or hydrogen-based traction vehicles.

Therefore, the need is felt to reduce aerodynamic drag of commercial vehicle thereby increasing the efficiency of the vehicle.

An aim of the present invention is to satisfy the above mentioned needs in a cost-effective and optimized manner.

### SUMMARY OF THE INVENTION

The aforementioned aim is reached by a cab and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a cab of a commercial vehicle in an opened configuration and provided with the air blocking element according to the invention;

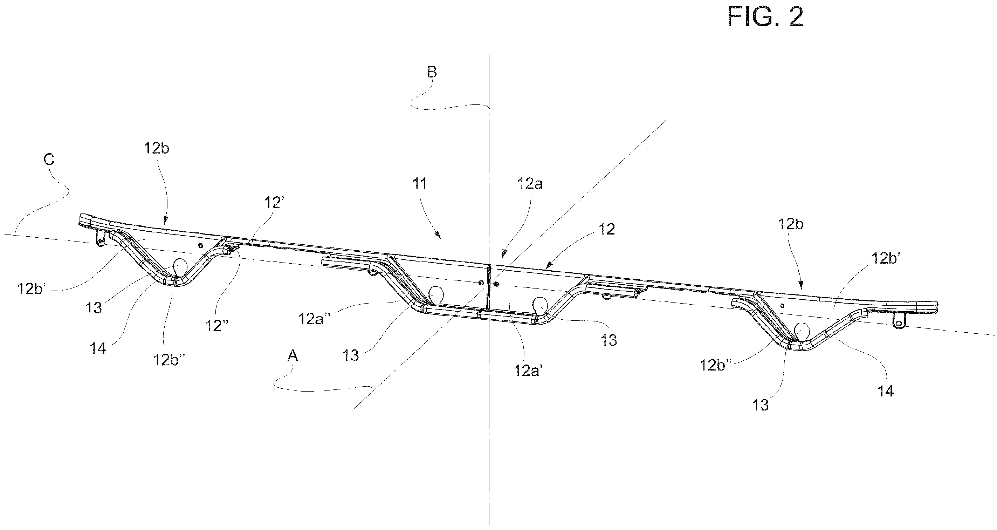

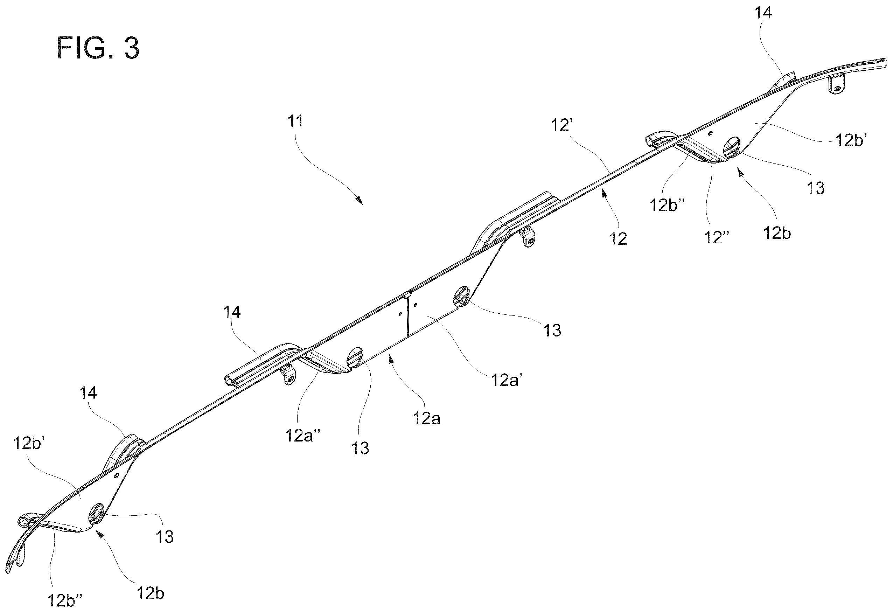

- Figures 2 and 3 are respectively a front and rear perspective view of the air blocking element according to the invention; and

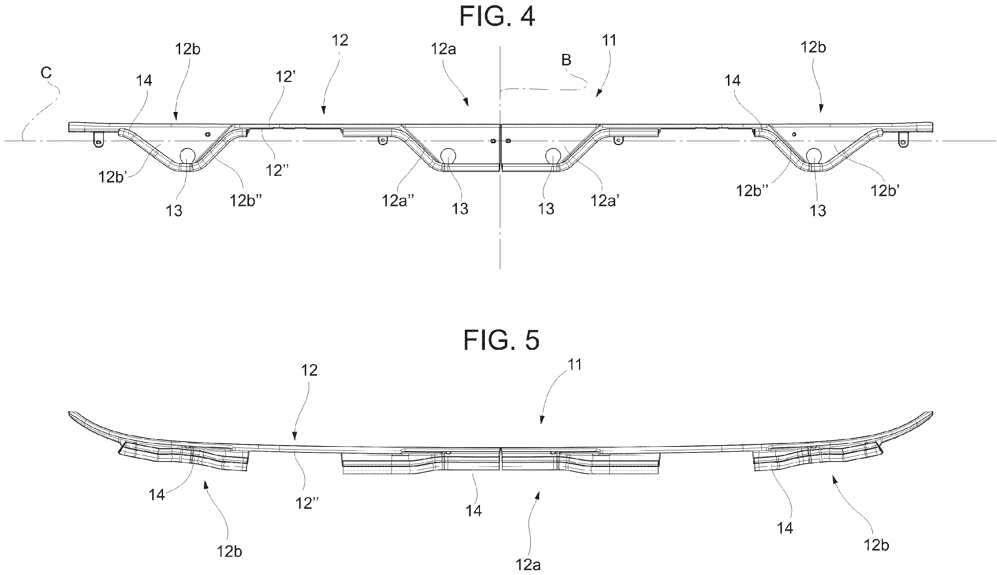

- Figure 4 and 5 are respectively a front and bottom view of the air blocking element according to the invention.

### DETAILED DESCRIPTION OF THE INVENTION

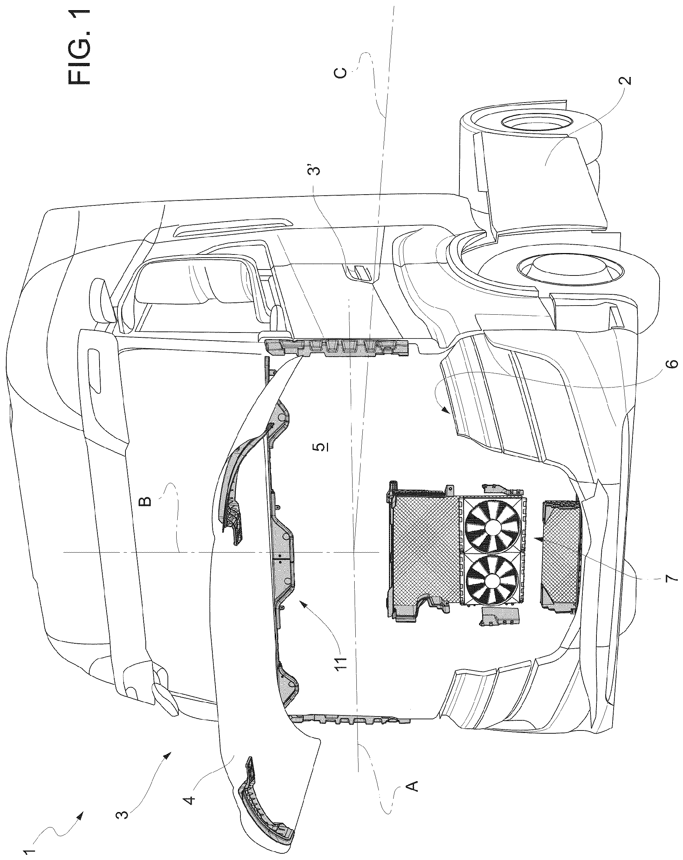

Figure 1 discloses a portion of a vehicle 1 such as a commercial vehicle, e.g. a truck, extending along a longitudinal axis A that coincides, in normal use, with driving direction of the vehicle 1, a transversal axis C and a vertical axis B.

In detail, vehicle 1 comprises a frame 2 and a cab 3 extending over the frame 2 along vertical axis B.

In particular, cab 3 comprises a hood 4 that is carried in a movable manner with respect to the body 3' of the cab 3 to assume a first configuration in which isolates a space 5 of cab 3 with respect to environment and a second configuration in which allows access to space 5 from the environment.

In detail, such hood 4 is linked to the body 3' of cab 3 by a movable connection (not shown) such as a hinge connection, configured to allow rotation of an upper portion of the hood 4 with respect to an axis parallel to transversal axis C.

The space 5 is therefore delimited by a perimeter 6 that matches with the shape defined by hood 4 in the first above mentioned configuration.

Space 5 may house different operative elements of the vehicle 1, in particular a portion of a traction system thereof, and in detail a heat management portion 7 comprising heat exchangers/ventilation means configured to cool down an operative fluid of the vehicle.

In particular, heat management portion 7 is placed in a central portion of the space 5 along transversal axis C and in particular extends along vertical axis B, starting from a lower edge of perimeter 6 and - in the disclosed embodiment - does not reach the upper edge thereof.

Advantageously, the cab 3 comprise a plurality of elements configured to direction the airflow impacting, during driving, on the hood 4 in order to reduce aerodynamic drag.

In detail, the elements can be carried by the hood 4 or by the body 3' of cab 3 along perimeter 6 of the space 5 or housed within space 5. In case such elements are carried body 3' or within space 5, they are preferably, in use, in contact with the hood 4.

In particular, the elements comprise:
- Sealing elements configured to avoid air passage through the hood 4 or between the hood 4 and the body 3 via space 5; and/or
- Guiding elements configured to channel and direction air passage through the hood 4 within space 5.

In particular, cab 3 comprises an air blocking element 11 configured to block the air passage within the hood 4 and the body 3' along an upper portion of the hood 4 along vertical axis B and along all the transversal extension of the hood 4 along transversal axis C.

In detail, blocking element 11 is carried by the body 3' along an upper edge of space 5, in particular it is fixed to the body 3' and cooperates at contact with hood 4 at the upper edge mentioned above.

Blocking element 11 comprises essentially a main portion 12 that is shaped as a flat plate having an upper edge 12' that is substantially linear, i.e. has substantially the same quota along vertical axis B and a lower edge that has a variable extension along vertical axis B with respect to upper edge 12'.

In detail, in use, the upper edge 12' is at the same height of the upper edge of the hood 4 and the lower edge 12" contours an upper portion of the perimeter (6) of the space 5.

In detail, main portion 12 comprises a central portion 12a and a pair of lateral portions 12b. In detail, central and lateral portions 12a, 12b extends along vertical axis B much with respect to remaining portion of the main portion 12, i.e. the lower edges 12" thereof are more distanced with respect to upper edges 12' thereof with respect to remaining portions of the main portion 12 that is substantially thinner along vertical axis B.

In detail, central portion 12a has a trapezoidal shape, in particular rounded at vertex, wherein the upper edge 12' is the main base and the lower edge 12" includes the minor base and the two inclined sides.

The lateral portions 12b have each a triangle shape, in particular rounded at vertex, wherein is the main base and the lower edge 12" includes the two inclined sides.

The central portion 12a and the lateral portions 12b each comprises a vertical portion 12a', 12b' extending along vertical axis C and a longitudinal portion 12a", 12b" extending from the lower edge 12" of the vertical portion 12a', 12b' along longitudinal axis A.

In particular, vertical portions 12a', 12b' defines at least one hole 13 configured to allow passage of elements through the blocking element 11 or fixation of the latter. In detail, the vertical portion 12a' of the central portion 12a' defines two holes 13 while the vertical portion 12b' of the lateral portion 12b defines a single hole 13.

In particular, such holes 13 are realized adjacent to the longitudinal portions 12a", 12b".

In detail, the longitudinal portions 12a", 12b" are each provided with a sealing 14 configured to be in contact with the hood 4 thereby locking air passage.

In particular, sealing 14 can be a polymeric, rubber, sealing, more in detail an extrusion sealing.

Preferably, except for sealings 14, the blocking element 11 is realized in polymeric material such as plastic. Moreover, the blocking element 11 can be realized in two symmetric portions with respect to a central axis parallel to vertical axis B.

The operation of the embodiment of the invention as described above is the following.

The blocking element 11 allows blocking air passing through the vertical space between hood 4 and body 3 thereby reducing aerodynamic drag.

In view of the foregoing, the advantages of the air blocking element, cab and vehicle according to the invention are apparent.

Thanks to the claimed blocking element, the air passage through the space between an upper portion of the hood and the body of the cab is avoided.

In particular, the proposed shape is voted to allow housing of required operative systems while blocking air passage.

Therefore, air drag is reduced and consequently vehicle fuel consumption.

Moreover, the proposed shape is voted to allow operation of other operative elements, such as windshield wipers, without compromising the need of blocking air passage as depicted above.

Furthermore, the realization in plastic material and in low pieces, e.g. by molding, allows cost-effective production of the blocking element.

It is clear that modifications can be made to the described air blocking element, cab and vehicle which do not extend beyond the scope of protection defined by the claims.

For example, the cab of the vehicle may be different and similarly hood. Accordingly, the shape and opening/s of the portions of the vehicular element claimed may be different.

## Claims

1. Cab (3) for a commercial vehicle (1) comprising a body (3') and a hood (4) connected to the body (3') by a movable connection to selectively allow or deny access to a space (5) realized in said body (3'), said cab (3) being provided with an air blocking element (11) said air blocking element (11) being placed between an upper edge of said hood (4) and said body (3') to block air passing through such upper edge of said hood (4) and said body (3'),, said air blocking element (11) comprising a main portion (12) provided with an upper edge (12') and a lower edge (12"), wherein said upper edge (12') is substantially linear and at the same quota along a vertical axis (B) of said cab (3), said lower edge (12") has a variable extension with respect to said upper edge (12') along said vertical axis (B),
wherein, in use, said upper edge (12') is at the same height of the upper edge of a hood (4) of said vehicle (1) and wherein, said lower edge (12"), in use, contours an upper portion of a perimeter (6) of a space (5) of said vehicle (1).

2. Cab according to claim 1, wherein said main portion (12) comprises a central portion (12a) and a pair of lateral portions (12b) along a transversal axis (C) of said vehicle (1), said central and lateral portions (12a, 12b) extending vertically over the remaining portions of said main portion (12) along said vertical axis (B).

3. Cab according to claim 2, wherein said central portion (12a) has a trapezoidal shape.

4. Cab according to claim 2 or 3, wherein said lateral portion (12b) has a triangular shape.

5. Cab according to any of claims 2 to 4, wherein central and lateral portions (12a, 12b) each comprises a vertical portion (12a', 12b') extending from said upper edge (12') and a longitudinal portion (12a", 12b") extending from said vertical portion (12a', 12b') along said lower edge (12") along a longitudinal axis (A) of said cab (3).

6. Cab according to claim 5, wherein said vertical portions (12a', 12b') each comprises at least one opening (13).

7. Cab according to claim 5 or 6, wherein said longitudinal portions (12a", 12b") each comprises a sealing (14).

8. Cab according to claim 7, wherein said sealing (14) is a rubber sealing.

9. Cab according to any of the preceding claims, wherein said main portion (12) is realized in polymeric material.

10. Cab according to any of the preceding claims, wherein said main portion (12) is realized in two pieces that are symmetrical about an axis parallel to said vertical axis (B) .

11. Cab according to any of the preceding claims, wherein said air blocking element (11) is carried by said body (3').

12. Vehicle (1) comprising a cab according to any of the preceding claims.
